# EUROPEAN PATENT SPECIFICATION

(11) **EP 4 308 899 B1**
(45) Date of publication and mention of the grant of the patent: **14.08.2024**
(21) Application number: 21777961.0
(22) Date of filing: 09.09.2021
(51) Int. Cl.: G01N 1/40, G01N 1/10, G01N 1/00, G01N 1/04

(54) **POROUS SILICON-BASED SAMPLING DEVICE FOR ANALYTE CONCENTRATION AND FOR DETECTION BY SPECTROMETRY OR CHROMATOGRAPHY**
AUF PORÖSEM SILIZIUM BASIERENDE PROBENAHMEVORRICHTUNG FÜR ANALYTKONZENTRATION UND FÜR DEN NACHWEIS DURCH SPEKTROMETRIE ODER CHROMATOGRAPHIE
DISPOSITIF D'ÉCHANTILLONNAGE À BASE DE SILICIUM POREUX POUR LA CONCENTRATION D'ANALYTES ET POUR LA DÉTECTION PAR SPECTROMÉTRIE OU CHROMATOGRAPHIE

(43) Date of publication of application: 24.01.2024
(73) Proprietor: Incize, 1348 Louvain-la-Neuve (BE)
(72) Inventor: SCHEEN, Gilles, 1348 Louvain-la-Neuve (BE); TUYAERTS, Romain, 1348 Louvain-la-Neuve (BE)
(74) Representative: Connor, Marco Tom
(86) International application number: PCT/EP2021/074826
(87) International publication number: WO 2023/036424

(56) References cited:
- EP-A2- 2 202 001
- VERCAUTEREN ROSELIEN ET AL: "Porous silicon membranes and their applications: Recent advances", SENSORS AND ACTUATORS A: PHYSICAL, ELSEVIER BV, NL, vol. 318, 4 December 2020 (2020-12-04), XP086454658, ISSN: 0924-4247, [retrieved on 20201204], DOI: 10.1016/J.SNA.2020.112486
- MUKHERJEE PRAN ET AL: "Plasma etch fabrication of 60:1 aspect ratio silicon nanogratings with 200 nm pitch", JOURNAL OF VACUUM SCIENCE, vol. 28, no. 6, 1 November 2010 (2010-11-01), 2 Huntington Quadrangle, Melville, NY 11747, pages C6P70 - C6P75, XP055923119, ISSN: 2166-2746, Retrieved from the Internet <URL:https://avs.scitation.org/doi/pdf/10.1116/1.3507427> DOI: 10.1116/1.3507427

## Description

### TECHNICAL FIELD

The present invention concerns a device for sampling a plurality of separate quantities of liquid carrying an analyte, and for concentrating this analyte. The device comprises a base and a plurality of discrete silicon porous portions distributed over and protruding out of the base. Each silicon porous portion forms a sampling area and is in the form of a layer comprising open pores opening at a top surface, such that the analyte contained in a liquid sample carrying a plurality of other compounds is preferably accommodated in the open pores opening at the top surface of the porous layer. The average pore diameter of the open pores opening at the top surface is optimized to selectively accommodate the analyte to be concentrated. The device of the present invention combines excellent concentration of the analyte, low risk of cross-contamination between neighbouring sampling areas even when the device comprises a large number of sampling areas, and simple and reproducible production. The device can be mounted directly onto apparatuses of spectrometry and/or of gas or fluid chromatography (GC, HPLC) typically used for detecting and characterizing the analyte concentrated in the porous layers.

### BACKGROUND OF THE INVENTION

For detecting, analyzing, or characterizing an analyte contained in a liquid sample as collected, it may be essential to first purify the sample to a certain degree, such as to concentrate the analyte and remove other foreign compounds and impurities contained in the liquid sample which could reduce the efficacy of the method used for detecting, analyzing or characterizing the analyte. The analyte can be a biomolecule such as a protein, or a virus and the carrying liquid can be water or a patient's body fluid such as saliva, urine, and the like. For example, the analyte can be a virus such as COVID19 virus, the liquid sample can be a nasal pharyngeal swab. The DNA's contained in the swab can be multiplied by Polymerase chain reaction (PCR) and tested by known methods.

Devices for supporting a plurality of fluid samples are known in the art. For example, US20080093548A1 describes a device for the presentation of samples for mass spectrometry analysis comprising: a substrate, said substrate forming a platform and one or more wells for receiving a fluid sample, said one or more wells having a wall region and a basal region, wherein said wall region is hydrophobic and said basal region is hydrophilic. Such device can receive separate fluid samples but is not suitable for concentrating an analyte comprised in a fluid sample, or even removing impurities from the fluid sample. The absence of porous layers at the bottom of the wells prevents the concentration of the analyte and consequently is unsuitable for detection techniques requiring an analyte concentration higher than in the fluid sample contained in the wells.

The use of plates comprising a plurality of porous silicon spots where liquid samples are loaded and at least partially absorbed is known. In such devices, the size of the pores determines which molecule or compound carried by the liquid can enter the pores, allowing for concentrating the analyte of interest and for separating impurities remaining out of the pores from the part of the sample contained in the pores. By cleaning the surface of the porous silicon spots, impurities and the liquid sample in excess are removed. This improves the results of further analyte detection techniques such as spectrometry or gas or fluid chromatography. During the cleaning phase, the porous silicon spots must be easily accessible. For example, existing devices comprising a silicon wafer with a plurality of wells wherein the floor of each well is porous and lies below a surface of the wafer cannot be easily accessed with blotting paper.

WO2000054309A1 describes a method for desorption and ionization of an analyte from a porous, light absorbing, semiconductor that can be used in the mass spectrometry of proteins and biomolecules. The process uses the semiconductor to trap an analyte. Etching of an array of well plates on n-type silicon wafer is described, permitting for the analysis of analyte-containing samples in each of the well plates. Such device can receive separate fluid samples. This document does not, however, explain how excess liquid and impurities can be removed from the wells, and how cross-contamination can be prevented. In particular, the removal of impurities which have not entered the pores with the liquid of the sample is critical for avoiding analyte dilution and interference during the analyte detection phase.

US2003057106A1 describes a method for making improved substrates for desorbing and ionizing analytes comprising providing an n-type semiconductor substrate having a plurality of sample reservoirs. The method comprises the following steps:
- providing an n-type silicon substrate;
- providing a white light source;
- focusing the light pattern on the n-type semiconductor substrate to result in a plurality of lit regions on the n-type semiconductor substrate;
- electrochemically etching the n-type semiconductor substrate for 1-2 minutes at a current of about 4 milliamps during illumination to form a sample reservoir at each lit region.

In the description of US2003057106A1, it is noted that the sample reservoirs are not "wells" in the sense of being completely empty, but etched regions of porous semiconductor containing pores, wherein the pores are preferably approximately 70-120 nm in diameter, are spaced about 100 nm apart, and have a pore depth of up to about 200 nm.

This substrate can receive separate fluid samples and concentrate an analyte comprised in a fluid sample. However, no means of avoiding cross-contamination between wells is described, for example in the event of an oversized drop of liquid or of a slight misalignment of the drop with the well, provoking an overflow from one well to neighbouring wells. Such cross-contamination can lead to erroneous detection of molecules. In case of virus detection, such as COVID19, this could mislead physicians while diagnosing patients based on the detection.

EP2202001 describes a test device having a base that is a non-sample surface and sample structures comprising pillars. The pilars can be made of a different material than the base and be porous to admit a larger volume of analyte. Because the side walls forming the pillars are also porous, analyte absorbed in the porosity of a first pillar can seep out and flow onto the base to contaminate an analyte absorbed in the porosity of a second pillar, adjacent to the first pillar. Vercauteren et al. (Sensors and Actuators, A318 (2021) 112486) describes porous silicon membranes and the production and applications thereof. Mukherjee et al. (J; Vac. Sci. Techhol. 23(6), (2010) 70) describes a multistage dry-etch process to create 100 nm half-pitch gratings in silicon with depths up to 6 µm.

As a result, there remains a need in the art for a device combining the following functionalities:
- receiving a plurality of liquid samples carrying an analyte, and concentrating the analytes,
- reducing cross-contamination between the sampling spots,
- facilitating the removal of impurities and / or of an excess of liquid sample from the porous layers,
- relatively quick, simple, and reproducible production process.

The present invention proposes a sampling device for concentrating an analyte carried by a liquid with a new structure for reducing the risks of cross-contamination and for facilitating the removal of impurities. These and other advantages are discussed in more detail in the following sections.

### SUMMARY OF THE INVENTION

The present invention concerns a device for sampling a plurality of separate quantities of liquid carrying an analyte and for concentrating the analyte, the device comprising a base comprising a lower main surface and an upper main surface separated from the lower main surface by a base thickness (Tb) measured along a normal direction (Z) perpendicular to a reference plane (P5).

The device is characterized in that a plurality of discrete protrusions made of silicon jut out of the upper main surface over a protrusion height (Hp) measured along the normal direction (Z),
wherein each discrete protrusion is topped by a porous layer comprising a top surface comprised in the reference plane (P5), wherein,
   - the top surface is joined to the upper main surface by peripheral walls defining the protrusion height (Hp), and
   - the porous layer of each discrete protrusion has a porous height (hp) measured along the normal direction (Z), which is smaller than the protrusion height (Hp) (i.e., hp < Hp), and
wherein the discrete protrusions are rigidly coupled to and distributed over the upper main surface (4), such that the top surfaces (5t) of the discrete protrusions are separated from one another by a distance (d1, d2, ...) measured on the reference plane (P5), preferably of at least 0.3 mm.

The device is also characterized in that an area of each of the top surfaces is comprised between 0.25 and 50 mm², preferably between 1 and 35 mm², more preferably between 3 and 8 mm², and in that the porous layer (5p):
- comprises open pores (3) opening at the top surface (5t) having an average pore diameter (Dp) at the top surface (5t) measured on a circle (6) of the reference plane (P5) inscribed in each pore comprised between 1 and 5000 nm, preferably between 5 and 50 nm, more preferably 20 ± 5 nm, and
- has an open void volume fraction (w) defined as a volume fraction of the open pores comprised between 30 and 90 vol.%.

In a preferred embodiment, the upper main surface, and preferably at least a portion of the peripheral walls, is more hydrophobic than the top surfaces of the porous layers.

Preferably, the base is:
- made of the same silicon as and is integral with the discrete protrusions, wherein the base thickness (Tb) is preferably comprised between 50 and 1500 µm, more preferably between 380 and 750 µm, or
- made of a material different from the silicon of the discrete protrusions, preferably a metal, more preferably a stainless steel, wherein the base thickness (Tb) is at least 200 µm, preferably at least 500 µm , more preferably comprised between 700 and 1000 µm, or
- a laminar structure with a silicon base portion of thickness (Tb1) measured along the normal direction (Z), made of the same silicon as and integral with the discrete protrusions, coupled to a support portion made of a material different from the silicon of the discrete protrusions, preferably a stainless steel or aluminium, a polymer, preferably a conductive polymer or composite, or a glass, of thickness (Tb2) measured along the normal direction (Z), wherein the base thickness (Tb = Tb1 + Tb2) is preferably comprised between 300 µm and 700 µm.

In a preferred embodiment, the upper main surface is functionalized, preferably for increasing hydrophobicity thereof by:
- modifying the upper main surface, and / or by
- coating the upper main surface with a functional layer which preferably comprises a fluorochemical compound or a polyolefin compound, the functional layer having a functional layer thickness (tf) measured along the normal direction (Z) that is lower than 90 % of the protrusion height (Hp), preferably lower than 50 %, preferably lower than 25 % of the protrusion height (Hp).

The protrusion height (Hp) is preferably comprised between 50 and 10000 nm, preferably between 100 and 2000 nm, more preferably between 600 and 1100 nm.

In a preferred embodiment of the device according to the invention, each discrete protrusion is characterized by any one of the following:
- the top surface is circular,
- the area of the top surface is comprised between 0.25 and 50 mm², preferably between 3 and 8 mm²,
- the porous height (hp) is comprised between 5 and 100 %, preferably between 20 and 90% of the protrusion height (Hp), preferably more than 50% of the protrusion height (Hp),
- the open void volume fraction of the porous layer is comprised between 30 and 90 vol.%, preferably between 50 and 80 vol.%.
- the top surface is functionalized to enhance compatibility with the analyte to be concentrated
- the upper main surface is functionalized to repel the solution containing the analyte,
- any combination of the preceding.

Preferably, the device according to the invention comprises at least 16 discrete protrusions, preferably at least 25, more preferably at least 96 discrete protrusions.

In a preferred embodiment, the device has a geometry configured for being used directly in an apparatus of spectrometry or of gas or fluid chromatography (GC, HPLC) for detecting the analyte concentrated in the porous layers, the apparatus being preferably chosen among Matrix-Assisted Laser Desorption / Ionization (MALDI), or Surface-Assisted Laser Desorption/lonization (SALDI), or Surface-Enhanced Raman Spectroscopy (SERS), or Fourier Transform Infrared Spectrometer (FTIR).

The present invention also concerns a process for producing the device according to the invention, comprising the following steps:
- providing a substrate comprising a silicon layer including an initial upper main surface which is planar, the silicon layer having an initial thickness (Ti) larger than or equal to the protrusion height (Hp), (i.e., Ti ≥ Hp),
- treating the initial upper main surface with a first etching solution to yield a porous silicon upper layer of desired thickness equal to the porous height (hp),
- masking portions of the porous silicon upper layer corresponding to positions of the top surfaces of the porous layers of the device with a patterned mask resistant to a second etching solution or to a gas or plasma etching treatment,
- etching the porous silicon upper layer and preferably part of the silicon layer adjacent thereto to a depth at least equal to the porous height (hp) to remove the portions of the porous silicon upper layer and preferably part of the silicon layer adjacent thereto, not covered by the patterned mask, using the second etching solution or the gas or plasma etching treatment,
- removing the patterned mask to obtain the device.

After etching the porous silicon upper layer and before removing the patterned mask, the process can also include a functionalization of the upper main surface, preferably by applying onto the upper main surface a functional layer, wherein the functional layer is preferably hydrophobic.

The process can further comprise functionalizing the top surfaces to enhance hydrophilicity and / or to enhance selectivity of and compatibility with the analyte, preferably by a plasma treatment, preferably by a plasma surface treatment, preferably a corona surface treatment.

In a preferred embodiment of the process, treating the initial upper main surface to yield the porous silicon upper layer of desired thickness comprises the following steps:
- applying the first etching solution comprising fluoride, preferably hydrogen fluoride, and a wetting agent onto the initial upper main surface,
- applying an electrical current to the initial upper main surface, for a time sufficient to yield the porous silicon upper layer of desired thickness (hp).

In a preferred embodiment of the process wherein the second etching solution is used for etching the porous silicon upper layer and preferably the silicon layer, the second etching solution preferably comprises a hydroxide, more preferably potassium hydroxide (KOH) or tetramethylammonium hydroxide (TMAH).

The present invention also concerns a method for concentrating an analyte contained in a liquid sample using the device according to the invention, the method comprising the following steps:
- applying a drop of the liquid sample containing the analyte onto the top surface of a discrete protrusion,
- allowing a portion of the drop of the liquid carrying the analyte to penetrate into the open pores of the porous layer by capillarity and gravity,
- removing a residual portion of the drop not absorbed in the porous layer.

The present invention also concerns a method for detecting an analyte in a liquid sample comprising the following steps:
- concentrating the analyte carried by the liquid sample with a method according to the invention,
- loading the device into an apparatus of spectrometry or of gas or fluid chromatography (GC, HPLC), preferably chosen among Matrix-Assisted Laser Desorption / Ionization (MALDI), or Surface-Assisted Laser Desorption/lonization (SALDI), or Surface-Enhanced Raman Spectroscopy (SERS), or Fourier Transform Infrared Spectrometer (FTIR),
- carrying out an analysis of the analyte with the apparatus.

### BRIEF DESCRIPTION OF THE FIGURES

For a fuller understanding of the nature of the present invention, reference is made to the following detailed description taken in conjunction with the accompanying Figures in which:
**Figure 1****:** shows a cross-sectional view of a sampling device according to the present invention, wherein the base is integral with the silicon protrusions.
**Figure 2****:** shows a cross-sectional view of a sampling device wherein the protrusion height (Hp) equals the porous height (hp).
**Figure 3****:** shows a cross-sectional view of a sampling device wherein the base is a laminar structure comprising a silicon base portion and a support portion of a material other than silicon.
**Figure 4****:** shows a cross-sectional view of a sampling device wherein the base (2) is made of a material other than silicon, and the protrusion height (Hp) is larger than the porous height (hp).
**Figure 5****:** shows a cross-sectional view of a sampling device wherein the base (2) is made of a material other than silicon, and the protrusion height (Hp) equals the porous height (hp).
**Figure 6****:** shows a top view of a sampling device wherein a number of porous layers are evenly distributed over the upper main surface (4).
**Figure 7a****:** shows a top enlarged view of pores (3) opening at a top surface, wherein each pore is entirely surrounded by silicon.
**Figure 7b****:** shows a magnified view of Figure 7a, showing how the diameter of the pores are measured.
**Figure 7c****:** shows a cross-sectional view of an embodiment of porous structure according to Figures 7a and 7b.
**Figure 7d****:** shows a top enlarged view of pores (3) opening at a top surface, wherein each pore is not entirely surrounded by silicon.
**Figure 7e****:** shows a magnified view of Figure 7d, showing how the diameter of the pores are measured.
**Figure 7f****:** shows a cross-sectional view of an embodiment of porous structure according to Figures 7d and 7e.
**Figure 8****:** shows cross-sectional views of a device at different step of a process for producing the device according to the invention, wherein the base is a laminar structure.

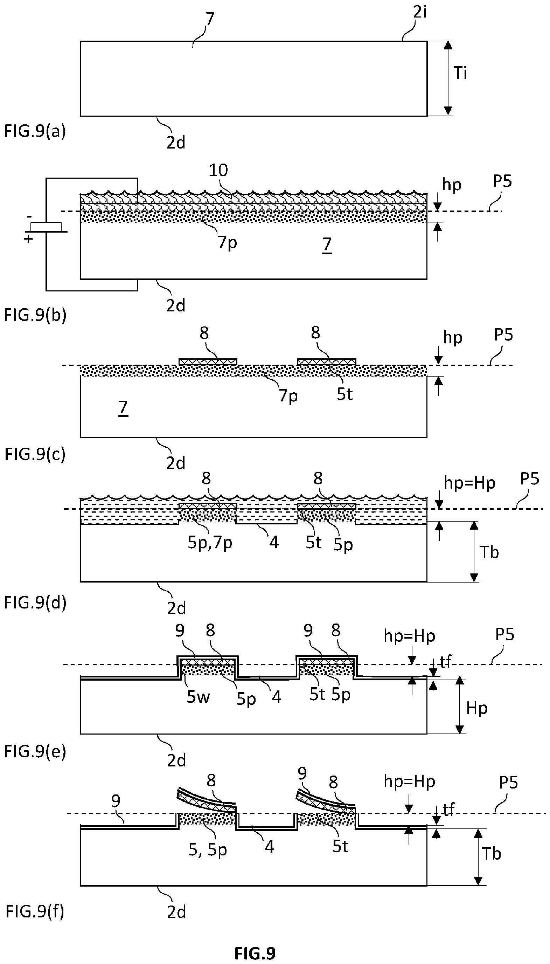

**Figure 9****:** shows cross-sectional views of a device at different step of a process for producing a device not according to the claimed invention, wherein the protrusion height (Hp) equals the porous height (hp).
**Figure 10a****:** shows a view of a device according to the invention, wherein liquid samples are being deposited on top surfaces separated by a hydrophobic coating.
**Figure 10b****:** shows a view of the device of Figure 10a, with liquid drops remaining on the corresponding top surfaces upon tilting the device substantially vertically.

### DETAILED DESCRIPTION OF THE INVENTION

The present invention concerns a device (1) used for concentrating an analyte of a liquid sample, and for the detection of the analyte with known techniques, such as spectrometry or gas or fluid chromatography (GC, HPLC). It is configured for sampling a plurality of separate quantities of liquid samples carrying analytes, and for concentrating the analytes by allowing the analyte to penetrate and be retained within the porosity of the porous layer (5) while leaving coarser impurities over the top surface (5t) and / or to decrease the concentration of other compounds in the separate quantities of liquid.

### DEVICE GEOMETRY

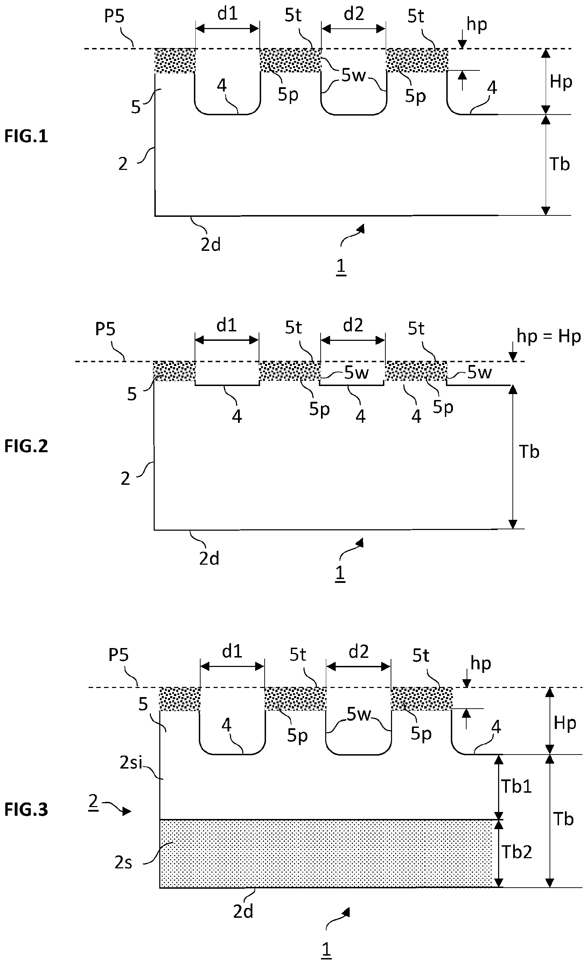

As shown in Figures 1, 3 and 4, the device (1) according to the present invention comprises a base (2) comprising a lower main surface (2d) and an upper main surface (4) separated from the lower main surface (2d) by a base thickness (Tb) measured along a normal direction (Z), wherein the normal direction (Z) is perpendicular to a reference plane (P5). The base (2) can be shaped like a plate parallel to the reference plane (P5) Preferably the base (2) has a substantially rectangular, square, or circular geometry extending predominantly in directions parallel to the reference plane (P5). More preferably, the base is mechanically and geometrically configured for being easily manipulated by hand by a user without breaking. More preferably, the geometry of the base is configured for being mounted directly on a support of a piece of equipment for detecting, analysing, and/or characterizing the analytes, such as a spectrometer or an apparatus of gas or fluid chromatography (GC, HPLC).

The device comprises a plurality of discrete protrusions (5), each protrusion being configured for receiving a sample of liquid carrying analytes. Preferably, the device comprises at least 16 discrete protrusions (5), preferably at least 25, more preferably at least 96 discrete protrusions. The discrete protrusions (5) are made of silicon and jut out of the upper main surface (4) over a protrusion height (Hp) measured along the normal direction (Z). Preferably, the protrusion height (Hp) is comprised between 50 and 10000 nm, preferably between 100 and 2000 nm, more preferably between 600 and 1100 nm. Each discrete protrusion is topped by a porous layer (5p) comprising a top surface (5t) comprised in the reference plane (P5). This means that all the discrete protrusions lie between the upper main surface (4) and the reference plane (P5), and that the top surfaces (5t) of each of the discrete protrusions (5) are planar, porous, and situated in the reference plane (P5). The top surfaces (5t) of the porous layers also form the top surfaces of the protrusions (5). The required level of coplanarity of the top surfaces (5t) of the different protrusions depends on the analysis technique the device is designed for. For example, a high level of coplanarity is required for use with apparatuses measuring the time-of-flight of particles for detecting the analytes. Lower levels of coplanarity may be required for gas or liquid chromatographs (GC; HPC). If the top surfaces are not coplanar to the level required for direct use in an apparatus, recalibration of the apparatus is required for adapting the time-of-flight measurement of particles coming from top surfaces at various distances from the detector of the apparatus.

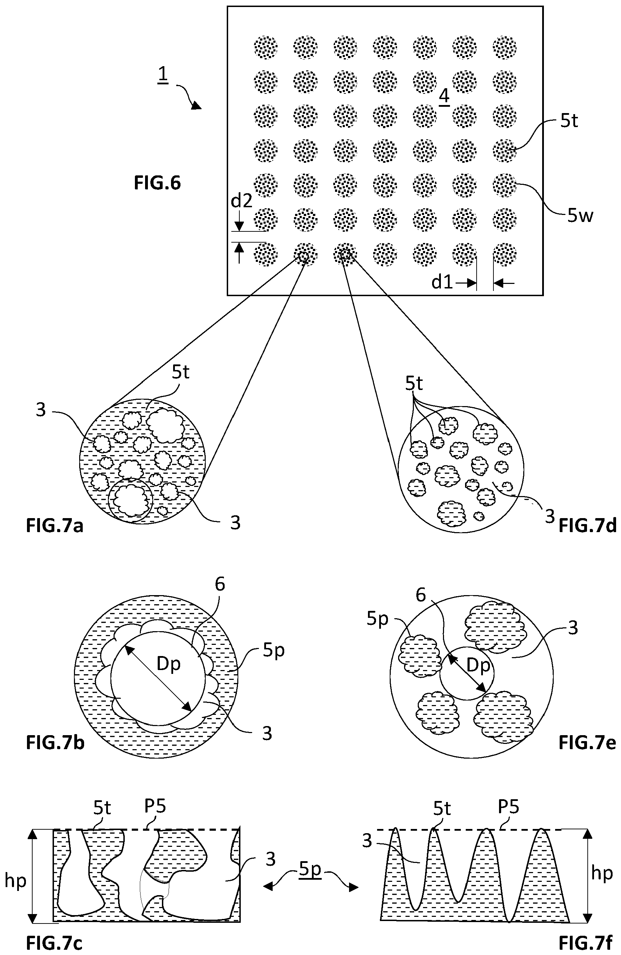

Each of the discrete protrusion (5) also comprises peripheral walls joining the top surface (5t) to the upper main surface (4) and defining the protrusion height (Hp). Each of the top surfaces (5t) has an area comprised between 0.25 and 50 mm², preferably between 1 and 35 mm², preferably between 10 and 30 mm², preferably between 15 and 25 mm², and more preferably between 8 and 12 mm². Preferably, each of the top surfaces (5t) is circular as illustrated in Figure 6.

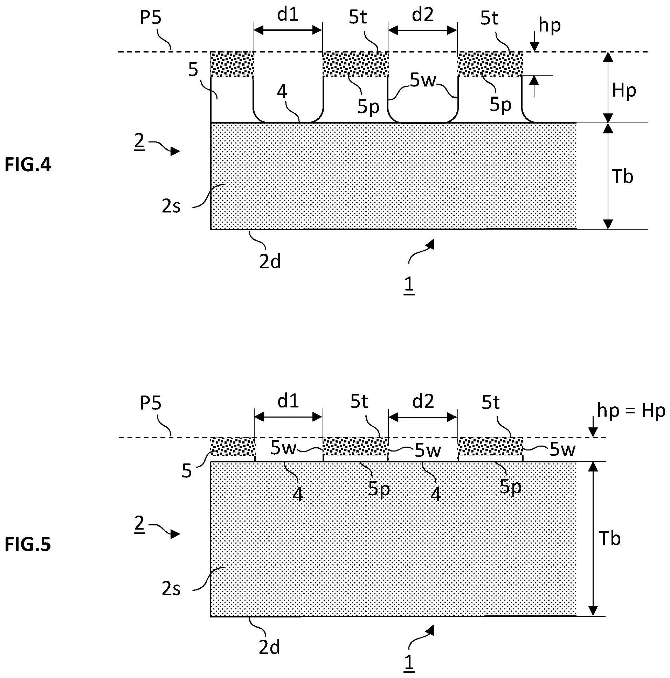

The porous layers (5p) of each of the discrete protrusions (5) extend from the top surface (5t) towards the base (2), without necessarily reaching it, over a porous height (hp) measured along the normal direction (Z), which is smaller than the protrusion height (Hp) i.e., hp < Hp. Preferably, the porous height (hp) is comprised between 5 and 100 %, preferably between 20 and 90% of the protrusion height (Hp), preferably more than 50% of the protrusion height (Hp). Figures 2 and 5 show embodiments of the device not part of the claimed invention, wherein the porous height (hp) is equal to the protrusion height (Hp), (i.e., hp = Hp). By contrast, Figures 1, 3 and 4 show embodiments according to the invention wherein hp < Hp.

The discrete protrusions (5) are rigidly coupled to and distributed over the upper main surface (4), such that the top surfaces (5t) of the discrete protrusions are separated from one another by a distance (d1, d2, ...) measured on the reference plane (P5), preferably of at least 0.3 mm, preferably of at least 1.0 mm, more preferably comprised between 1.1 mm and 5.0 mm, more preferably between 1.3 and 3.0 mm. As shown in Figure 6, the distance separating a first top surface (5t) from a second top surface (5t) is calculated as the minimal distance measured in the reference plane (P5) and separating a point belonging to the first top surface from another point belonging to the second top surface. Depending on the distribution of the discrete protrusions (5) on the upper main surface (4), the distances separating the top surfaces (5t) of neighbouring protrusions (5) can vary.

The discrete protrusions (5) jut out of the upper main surface (4) of the device. This makes the top surface (5t) of the porous layers (5p) more accessible for cleaning or removing the impurities and / or an excess portion of the quantity of the liquid situated on the top surface (5t) of a protrusion. This is a significant advantage of the present device compared for example with existing well plates wherein the porous layers are located at the bottom of wells.

Preferably, the device (1) according to the invention has a geometry configured for being used directly in an apparatus of spectrometry or of gas or fluid chromatography (GC, HPLC) for detecting the analyte contained and concentrated in the porous layers (5p). The term 'being used directly' means that the device according to the invention has a geometry configured for fitting and being installed in the support for sample holders of an apparatus of spectrometry or of gas of fluid chromatography without being further modified or without using an adapter and, above all, without transfer of the concentrated analytes to another support. For example, the device can have a similar geometry as sample holders provided by the apparatuses' providers. The apparatus is preferably chosen among Matrix-Assisted Laser Desorption / Ionization (MALDI), or Surface-Assisted Laser Desorption/lonization (SALDI), or Surface-Enhanced Raman Spectroscopy (SERS), or Fourier Transform Infrared Spectrometer (FTIR).

### POROUS LAYERS (5P)

The top surfaces (5t) are porous, such that the porous layers (5p) comprise open pores (3) opening at the top surface (5t) as illustrated in Figures 7a to 7f. As shown in Figures 7b and 7e, a pore diameter of a specific pore at the level of the top surface (5t) is measured on a circle (6) which is comprised in the reference plane (P5) and inscribed in the specific pore. The average pore diameter (Dp) on each of the top surfaces (5t) is comprised between 1 and 5000 nm, preferably between 5 and 50 nm, more preferably between 20 ± 5 nm. The average pore diameter (Dp) determines which molecules or compounds carried by the quantities of liquid applied onto the top surface can enter the pores, allowing for selecting molecules or compounds of specific sizes and including the analyte, and / or for concentrating the analyte.

As shown in Figure 7a&7c and 7d&7f, the pores (3) opening at the top surface of the porous layers can have various geometries. On the one hand, as illustrated in Figures 7a&7c, the pores can be holes distributed over the top surface (or at the reference plane (P5)) and giving access to a pore extending towards the base (2) over a distance (hp) measured along the normal axis (Z). The holes are surrounded by silicon material. On the other hand, as illustrated in Figures 7d&7f, the pores can be in the form of spaces separating spikes of silicon material rising over the porous height (hp) to tips defining the top surface, in a direction substantially parallel to the normal direction (Z). In the latter case, each of the pores is necessarily in fluid communication with neighbouring pores within a porous layer, and the diameters of the pores are measured on circles (6) comprised in the reference plane (P5) and inscribed between three or more adjacent silicon spikes. The spikes themselves can be porous to increase the surface area of the porous layer (5p).

Each porous layer (5p) has an open void volume fraction (w) defined as a volume fraction of the open pores (3) comprised between 30 and 90 vol.%, preferably between 50 and 70 vol.%. In other words, the open void volume fraction (w) corresponds to a ratio of a total volume of the open pores (3) within each porous layer to a volume of the corresponding porous layer (5p). Closed pores are not accounted for, since the analytes cannot reach such closed pores.

### OPEN VOID VOLUME FRACTION MEASUREMENT TECHNIQUES

The open void volume fraction (w) can be measured via different known measurement techniques; such as gravimetry or interferometry or adsorption techniques.
- In the gravimetry technique, the substrate is measured and weighed before and after the first etching treatment to yield a silicon porous layer and the device is weighed after removal of the porous portions of the device. The open void volume fraction is calculated from these measured values.
- In the interferometry technique, optical measurements of the porous portions are performed. As the optical index of porous silicon is a combination of the optical indices of Silicon and air which varies with the fractions of Silicon and air in the porous silicon, the open void volume fraction can be derived from the optical measurement of the optical index of porous silicon.
- Other open void volume fraction measurement techniques exist, comprising adsorption techniques such as Brunauer-Emmett-Teller (BET) and Barrett-Joyner-Halenda (BJH) techniques.

In case of doubt, porosity is measured by the gravimetry technique.

### BASE (2)

In a first embodiment of the device according to the invention shown in Figure 1, the base (2) is made of the same silicon as the discrete protrusions (5) and is integral with the discrete protrusions (5). For example, this can be the case of a device obtained by applying a process to a single silicon wafer. In this first embodiment of the device according to the invention, the base thickness (Tb) is preferably comprised between 50 and 1500 µm, more preferably between 380 and 725 µm. The lower main surface (2d) can be coated with a conductive layer to increase conductivity required for some analysis techniques such as MALDI.

In a second embodiment of the device according to the invention illustrated in Figures 4, the base (2) is made of a material different from the silicon of the discrete protrusions (5). The material is preferably a metal, such as a stainless steel or aluminium, a polymer, preferably a conductive polymer or composite, or a glass. In this second embodiment of the device according to the invention, the base thickness (Tb) can be at least 200 µm, preferably at least 500 µm , more preferably comprised between 700 and 1000 µm. Support portions of the foregoing thicknesses are configured for being mounted on a holder specific to the analysis equipment used. It is possible to make without such holder. In this case, the base preferably has a thickness of at least 2000 µm, preferably at least 5000 µm, more preferably comprised between 2500 and 8000 µm.

In a third embodiment of the device according to the invention illustrated in Figure 3, the base (2) is a laminar structure comprising a silicon base portion (2si) of thickness (Tb1) measured along the normal direction (Z), made of the same silicon as and integral with the discrete protrusions (5). The silicon base portion is rigidly coupled to a support portion (2s) made of a material different from the silicon of the discrete protrusions (5), preferably a metal, such as including stainless steel or aluminium, a polymer, preferably a conductive polymer or composite, or a glass, of thickness (Tb2) measured along the normal direction (Z), wherein the base thickness (Tb = Tb1 + Tb2) is preferably at least 200 µm, preferably comprised between 300 µm and 1000 µm, more preferably comprised between 300 and 7000 µm. Support portions of the foregoing thicknesses are configured for being mounted on a holder specific to the analysis equipment used. It is possible to make without such holder. In this case, the base preferably has a thickness of at least 2000 µm, preferably at least 5000 µm, more preferably comprised between 2500 and 8000 µm. Coupling between the silicon base portion (2si) and the support portion (2s) can be performed by any method known in the art, such as gluing, welding, soldering, and the like.

### FUNCTIONALIZATION

In a preferred embodiment of the invention, the upper main surface (4), and preferably a part of the peripheral walls (5w), is more hydrophobic than the top surfaces (5t) of the porous layers (5p). The upper main surface (4) can be functionalized, preferably for increasing hydrophobicity thereof, preferably for increasing omniphobicity thereof, wherein omniphobicity is defined as a high repellency property to a wide range of liquids, including oils, solvents, and other low surface energy liquids. This can be achieved by modifying the upper main surface (4), and / or by coating the upper main surface (4) with a functional layer (9). In the latter case, the functional layer (9) preferably comprises a polyolefin compound or a fluorochemical compound i.e., any chemical compound containing fluorine. Furthermore, the functional layer thickness (tf) of the functional layer (9) at the level of the upper main surface (4) is measured along the normal direction (Z) and is preferably lower than 90 % of the protrusion height (Hp), preferably lower than 50 %, preferably lower than 25 % of the protrusion height (Hp). Preferably, the functional layer (9) can also extend over the peripheral walls (5w) of the discrete protrusions (5). A measurement of the hydrophobicity and preferably omniphobicity of the upper main surface (4) can be performed via the contact angle measurement technique. A surface is considered herein as being hydrophobic, respectively omniphobic, if a contact angle between the surface and a drop of water for hydrophobicity, and of a correspoding liquid for omniphobicity is at least 90°, preferably at least 100°. Examples of corresponding liquids of interest for determining the omniphobicity of a surface include oils, solvents such as Isopropyl Alcohol (IPA), ethanol, acetone, and acetonitrile, and the like.

Alternatively or concomitantly, the top surfaces (5t) and at least a portion of the surfaces of the open pores (3) can be functionalized, for example for increasing hydrophilicity and / or for enhancing selectivity to and compatibility with the analyte, preferably by plasma treatment, more preferably by corona treatment. The top surfaces (5t) and at least a portion of the surfaces of the open pores (3) can also be functionalized by one or combination of alternative chemical, physico-chemical, and / or electrochemical treatments, including for example,
- applying an oxide layer,
- growing an oxide or other materials on the top surfaces (5t),
- depositing materials by atomic layer deposition (ALD),
- electrodeposition,
- silanisation.

### PROCESS FOR PRODUCING THE DEVICE

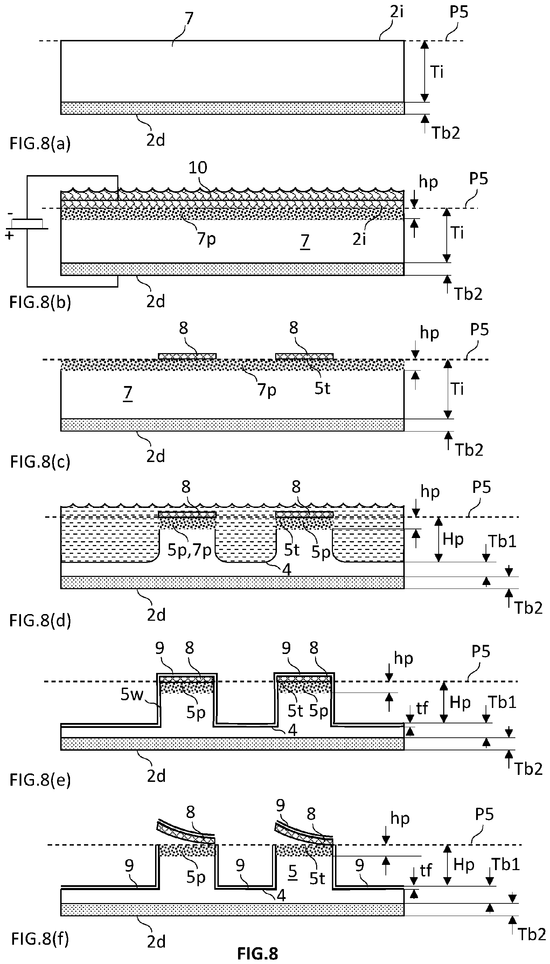

The invention also proposes a process for producing the device according to the invention, as illustrated in the examples of Figure 8. The process according to the invention comprises the following steps:
- providing a substrate comprising a silicon layer (7) including an initial upper main surface (2i) which is planar, an example of which is shown in Figure 8a. The silicon layer (7) has an initial thickness (Ti) larger than or equal to the protrusion height (Hp) i.e., Ti ≥ Hp depending on whether or not the silicon layer is coupled to another layer of material to form a laminate as illustrated in Figures 3 and 8.
- as shown in Figure 8(b), treating the initial upper main surface (2i) with a first etching solution (10) to yield a porous silicon upper layer (7p) of desired thickness equal to the porous height (hp) as shown in Figure 8(c). Preferably, this step is carried out as follows,
   ∘ applying the first etching solution (10) comprising fluoride, for example hydrogen fluoride, and a wetting agent onto the initial upper main surface (2i). For example, the wetting agent can be ethanol or acetic acid.
   ∘ applying an electrical current to the initial upper main surface (2i), for a time sufficient to yield the porous silicon upper layer (7p) of desired thickness. The electrical current direction can be normal or parallel to the initial upper main surface (2i). More details about how the electrical current is applied can be found in BE1025681B1.
- as shown in Figure 8(c), masking portions of the porous silicon upper layer (7p) corresponding to positions of the top surfaces (5t) of the porous layers (5p) of the device with a patterned mask (8). This patterned mask is resistant to a following etching step illustrated in Figure 8(d).
- etching the silicon layer (7) to a depth equal to the protrusion height (Hp) and greater than the porous height (hp), as illustrated in the examples of Figure 8(d) to remove the portions of the porous silicon upper layer (7p) not covered by the patterned mask (8) and part of the silicon layer (7) adjacent thereto, preferably using a second etching solution or a gas or plasma etching treatment. This etching forms the protrusions (5) by removing material around them, with the peripheral walls (5w) and the upper main surface (4) of the device according to the invention.
- removing the patterned mask (8) to obtain the device, see the examples in Figure 8f.

In an alternative embodiment of the process according to the invention, the steps which are the masking of portions of the porous silicon upper layer (7p), etching the silicon layer (7), and removing the mask can be replaced by forming the protrusions by laser ablation instead, which does not require masking. In this alternative step, the silicon layer is etched by laser ablation to a depth equal to the protrusion height (Hp) greater than the porous height (hp) to remove the portions of the porous silicon upper layer (7p) to form the protrusions (5).

Preferably and as shown in Figure 8(e), the process according to the invention also comprises an additional step of functionalizing the upper main surface (4), preferably by applying a functional layer (9) which is preferably hydrophobic onto the upper main surface (4). This step is performed after the etching of the silicon layer (7) and preferably before removing the patterned mask (8). This simplifies the process by using the same mask for the etching and the functionalizing steps. Such functional layer (9) preferably comprises a fluorochemical compound or a polyolefin compound, and has a functional layer thickness (tf) at the level of the upper main surface (4) measured along the normal direction (Z) and is preferably lower than 90 % of the protrusion height (Hp), preferably lower than 50 %, preferably lower than 25 % of the protrusion height (Hp). Preferably, the functional layer (9) can also extend over at least a portion of the peripheral walls (5w) of the discrete protrusions (5).

Preferably, the process according to the invention also comprises an additional step of functionalizing the top surfaces (5t) to enhance hydrophilicity and / or to enhance selectivity to and compatibility with the analyte, preferably by a plasma treatment, preferably by a plasma surface treatment such as a corona surface treatment.

Preferably, the second etching solution used for etching the porous silicon upper layer (7p) and preferably the silicon layer (7) comprises a hydroxide, more preferably potassium hydroxide (KOH) or tetramethylammonium hydroxide (TMAH).

### METHOD FOR CONCENTRATING AN ANALYTE

The invention also proposes a method for concentrating an analyte carried by a liquid using the device according to the invention. The method comprises the following steps:
- Applying a drop of the liquid carrying the analyte onto a top surface (5t). This can be achieved by hand by an operator or using a machine for increasing the productivity or precision of the method.
- Allowing a portion of the drop of the liquid carrying the analyte to penetrate into the open pores (3) of the porous layer (5p) by capillarity. Depending on the pore size, the liquid entering the pores (3) can carry the analyte into the pores, whereas impurities or compounds initially carried by the liquid remain out of the pores. As a result, the concentration in analyte of the liquid into the pores is increased.
- Removing a residual portion of the drop not absorbed in the porous layer. For example, this may be achieved by applying a sheet of absorbing material such as blotting paper onto the top surfaces (5t). Alternatively, or concomitantly, the residual portion can be removed by rinsing the porous surfaces. Excess liquid can also be removed by simply allowing it to evaporate. By removing the residual portion of the drop, the impurities or compounds which remained out of the pores and are carried by the residual portion of the drop can also be removed from the top surfaces. This in turn decreases the interferences due to the presence of the impurities or compounds in the detection of the analyte by an apparatus of spectrometry or chromatography.

### METHOD FOR DETECTING AN ANALYTE

The invention also proposes a method for detecting an analyte carried by a liquid sample using the device according to the invention. The method comprises the following steps:
- Concentrating the analyte carried by the liquid sample with a method for concentrating the analyte according to the previous section.
- Loading the device into an apparatus of spectrometry or of gas or fluid chromatography (GC, HPLC), preferably chosen among Matrix-Assisted Laser Desorption / Ionization (MALDI), or Surface-Assisted Laser Desorption/lonization (SALDI), or Surface-Enhanced Raman Spectroscopy (SERS), or Fourier Transform Infrared Spectrometer (FTIR).
- Carrying out an analysis with the apparatus.

### EXAMPLE

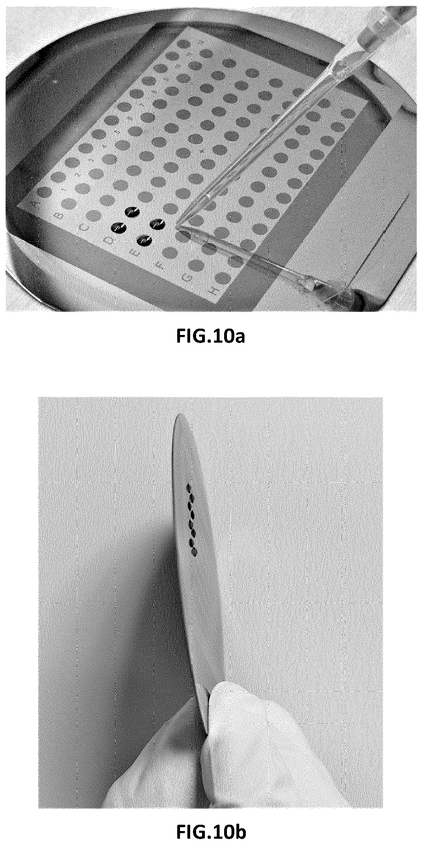

As an example, the device shown in Figures 10a and 10b was manufactured with the following properties. The device comprises 96 discrete protrusions evenly distributed over the upper main surface of size 51 mm by 35 mm. The protrusion height (Hp) is 1000 nm. The area of each of the top surface is 4.52 mm² and the top surfaces have a round circular shape. The porous height (hp) is 900 +/- 50 nm. The average pore size is 20 nm and the open void volume fraction (w) is 66 +/- 3 %. An omniphobic layer was deposited between the spots, on the upper main surface (4), and on the sidewalls of the protrusions, with deposition of a fluoropolymer.
Drops of an aqueous solution containing a solute were deposited onto the porous layer (5p) of the discrete protrusions of the device as shown in Figure 10a. First portions of the liquid samples entered the pores whereas second portions of the liquid samples remained out of the pores above the top surfaces of the device. Due to the omniphobic layer, the second portions of the liquid samples remain on the more hydrophobic porous surfaces of the protrusions by capillarity, even upon tilting the device vertically. As shown in Figure 10b. The risk of cross contamination between liquid drops is substantially reduced with the present device compared to existing devices.

| **REF** | **DESCRIPTION** |
|---|---|
| 1 | Device |
| 2 | Base |
| 2d | Lower main surface |
| 2s | support portion |
| 2si | silicon base portion |
| 2i | Initial upper main surface |
| 3 | Open pore |
| 4 | Upper main surface |
| 5 | Discrete protrusion |
| 5p | Porous layer |
| 5t | Top surface |
| 5w | Peripheral walls |
| 6 | Circle of the reference plane inscribed in each pore |
| 7 | Silicon layer |
| 7p | Porous silicon upper layer |
| 8 | Patterned mask |
| 9 | Functional layer |
| 10 | First etching solution |

## Claims

1. A device (1) for sampling a plurality of separate quantities of liquid carrying an analyte and for concentrating the analyte, the device comprising a base (2) comprising a lower main surface (2d) and an upper main surface (4) separated from the lower main surface (2d) by a base thickness (Tb) measured along a normal direction (Z) perpendicular to a reference plane (P5), a plurality of discrete protrusions (5) made of silicon jut out of the upper main surface (4) over a protrusion height (Hp) measured along the normal direction (Z),
• wherein each discrete protrusion (5) is topped by a porous layer (5p) comprising a top surface (5t) comprised in the reference plane (P5), wherein,
∘ the top surface is joined to the upper main surface (4) by peripheral walls (5w) defining the protrusion height (Hp), and
∘ the porous layer of each discrete protrusion has a porous height (hp) measured along the normal direction (Z), which is smaller than the protrusion height (Hp) and which is preferably comprised between 5 and 90 % of the protrusion height (Hp), and
• wherein the discrete protrusions are rigidly coupled to and distributed over the upper main surface (4), such that the top surfaces (5t) of the discrete protrusions are separated from one another by a distance (d1, d2, ...) measured on the reference plane (P5), preferably of at least 0.3 mm, and wherein
• an area of each of the top surfaces (5t) is comprised between 0.25 and 50 mm², preferably between 1 and 35 mm², more preferably between 3 and 8 mm² and wherein,
• the porous layer (5p),
∘ comprises open pores (3) opening at the top surface (5t) having an average pore diameter (Dp) at the top surface (5t) measured on a circle (6) of the reference plane (P5) inscribed in each pore comprised between 1 and 5000 nm, preferably between 5 and 50 nm, more preferably 20 ± 5 nm, and
∘ has an open void volume fraction (w) defined as a volume fraction of the open pores comprised between 30 and 90 vol.%.

2. Device according to claim 1, wherein the upper main surface (4), and preferably at least a portion of the peripheral walls (5w), is more hydrophobic than the top surfaces (5t) of the porous layers (5p).

3. Device according to claim 1 or 2, wherein the base (2):
• is made of the same silicon as and is integral with the discrete protrusions (5), wherein the base thickness (Tb) is preferably comprised between 50 and 1500 µm, more preferably between 380 and 750 µm, or
• is made of a material different from the silicon of the discrete protrusions (5), preferably a metal, more preferably a stainless steel, wherein the base thickness (Tb) is at least 200 µm, preferably at least 500 µm , more preferably comprised between 700 and 1000 µm, or
• is a laminar structure with a silicon base portion (2si) of thickness (Tb1) measured along the normal direction (Z), made of the same silicon as and integral with the discrete protrusions (5), coupled to a support portion (2s) made of a material different from the silicon of the discrete protrusions (5), preferably a stainless steel or aluminium, a polymer, preferably a conductive polymer or composite, or a glass, of thickness (Tb2) measured along the normal direction (Z), wherein the base thickness (Tb = Tb1 + Tb2) is preferably comprised between 300 µm and 700 µm.

4. Device according to any one of the preceding claims, wherein the upper main surface (4) is functionalized, preferably for increasing hydrophobicity thereof by:
• modifying the upper main surface (4), and / or by
• coating the upper main surface (4) with a functional layer (9) which preferably comprises a fluorochemical compound or a polyolefin compound, the functional layer (9) having a functional layer thickness (tf) measured along the normal direction (Z) that is lower than 90 % of the protrusion height (Hp), preferably lower than 50 %, preferably lower than 25 % of the protrusion height (Hp).

5. Device according to any one of the preceding claims, wherein the protrusion height (Hp) is comprised between 50 and 10000 nm, preferably between 100 and 2000 nm, more preferably between 600 and 1100 nm.

6. Device according to any one of the preceding claims, wherein each discrete protrusion (5) is **characterized by** any one of the following,
• the top surface (5t) is circular,
• the area of the top surface (5t) is comprised between 0.25 and 50 mm², preferably between 3 and 8 mm²,
• the porous height (hp) is comprised between 5 and 90 %, preferably between 20 and 90% of the protrusion height (Hp), preferably more than 50% of the protrusion height (Hp),
• the open void volume fraction of the porous layer (5p) is comprised between 30 and 90 vol.%, preferably between 50 and 80 vol.%.
• the top surface (5t) is functionalized to enhance compatibility with the analyte to be concentrated
• the upper main surface (4) is functionalized to repel the solution containing the analyte,
• any combination of the preceding.

7. Device according to any one of the preceding claims, comprising at least 16 discrete protrusions (5), preferably at least 25, more preferably at least 96 discrete protrusions.

8. Device according to any one of the preceding claims, having a geometry configured for being used directly in an apparatus of spectrometry or of gas or fluid chromatography (GC, HPLC) for detecting the analyte concentrated in the porous layers (5p), the apparatus being preferably chosen among Matrix-Assisted Laser Desorption / Ionization (MALDI), or Surface-Assisted Laser Desorption/lonization (SALDI), or Surface-Enhanced Raman Spectroscopy (SERS), or Fourier Transform Infrared Spectrometer (FTIR).

9. A process for producing the device according to any one of claims 1-8, comprising the following steps:
• providing a substrate comprising a silicon layer (7) including an initial upper main surface (2i) which is planar, the silicon layer (7) having an initial thickness (Ti) larger than or equal to the protrusion height (Hp),
• treating the initial upper main surface (2i) with a first etching solution (10) to yield a porous silicon upper layer (7p) of desired thickness equal to the porous height (hp),
• masking portions of the porous silicon upper layer (7p) corresponding to positions of the top surfaces (5t) of the porous layers (5p) of the device with a patterned mask (8) resistant to a second etching solution or to a gas or plasma etching treatment,
• etching the porous silicon upper layer (7p) and preferably part of the silicon layer (7) adjacent thereto to a depth greater than the porous height (hp) to remove the portions of the porous silicon upper layer (7p) and part of the silicon layer (7) adjacent thereto, not covered by the patterned mask (8), using the second etching solution or the gas or plasma etching treatment,
• removing the patterned mask (8) to obtain the device.

10. Process according to claim 9, wherein, after etching the porous silicon upper layer (7p) and before removing the patterned mask (8), the upper main surface (4) is functionalized, preferably by applying onto the upper main surface (4) a functional layer (9), wherein the functional layer is preferably hydrophobic.

11. Process according to claim 9 or 10, further comprising functionalizing the top surfaces (5t) to enhance hydrophilicity and / or to enhance selectivity of and compatibility with the analyte, preferably by a plasma treatment, preferably by a plasma surface treatment, preferably a corona surface treatment.

12. Process according to any one of claims 9 to 11, wherein treating the initial upper main surface (2i) to yield the porous silicon upper layer (7p) of desired thickness comprises the following steps:
• applying the first etching solution (10) comprising fluoride, preferably hydrogen fluoride, and a wetting agent onto the initial upper main surface (2i),
• applying an electrical current to the initial upper main surface (2i), for a time sufficient to yield the porous silicon upper layer (7p) of desired thickness (hp).

13. Process according to any one of claims 9 to 12, wherein the second etching solution is used for etching the porous silicon upper layer (7p) and preferably the silicon layer (7), wherein the second etching solution preferably comprises a hydroxide, more preferably potassium hydroxide (KOH) or tetramethylammonium hydroxide (TMAH).

14. A method for concentrating an analyte contained in a liquid sample using the device according to any one of claims 1-8, the method comprising the following steps:
• applying a drop of the liquid sample containing the analyte onto the top surface (5t) of a discrete protrusion (5),
• allowing a portion of the drop of the liquid carrying the analyte to penetrate into the open pores of the porous layer (5p) by capillarity and gravity,
• removing a residual portion of the drop not absorbed in the porous layer.

15. A method for detecting an analyte in a liquid sample comprising,
• concentrating the analyte carried by the liquid sample with a method according to the preceding claim 14,
• loading the device into an apparatus of spectrometry or of gas or fluid chromatography (GC, HPLC), preferably chosen among Matrix-Assisted Laser Desorption / Ionization (MALDI), or Surface-Assisted Laser Desorption/lonization (SALDI), or Surface-Enhanced Raman Spectroscopy (SERS), or Fourier Transform Infrared Spectrometer (FTIR),
• carrying out an analysis of the analyte with the apparatus.

## Patentansprüche

1. Vorrichtung (1) zur Probenahme einer Mehrzahl separater Mengen einer Flüssigkeit, die einen Analyten in sich trägt, und zum Konzentrieren des Analyten, wobei die Vorrichtung umfasst: eine Basis (2), umfassend eine untere Hauptfläche (2d) und eine obere Hauptfläche (4), die von der unteren Hauptfläche (2d) durch eine Basisdicke (Tb), gemessen entlang einer Normalenrichtung (Z) senkrecht zu einer Referenzebene (P5), getrennt ist, eine Mehrzahl von einzelnen Vorsprüngen (5), die aus Silicium hergestellt sind und die aus der oberen Hauptfläche (4) über eine Vorsprungshöhe (Hp), gemessen entlang der Normalenrichtung (Z), herausragen,
• wobei jeder einzelne Vorsprung (5) oben durch eine poröse Schicht (5p) abgeschlossen wird, die eine Oberseitenfläche (5t) umfasst, die in der Referenzebene (P5) liegt, wobei
o die Oberseitenfläche mit der oberen Hauptfläche (4) durch periphere Wände (5w) verbunden ist, welche die Vorsprungshöhe (Hp) definieren, und
o die poröse Schicht jedes einzelnen Vorsprungs eine poröse Höhe (hp), gemessen entlang der Normalenrichtung (Z), aufweist, die kleiner als die Vorsprungshöhe (Hp) ist und die vorzugsweise zwischen 5 und 90 % der Vorsprungshöhe (Hp) beträgt, und
• wobei die einzelnen Vorsprünge unbeweglich mit der oberen Hauptfläche (4) gekoppelt und über diese verteilt sind, derart dass die Oberseitenflächen (5t) der einzelnen Vorsprünge voneinander durch einen Abstand (d1, d2, ...), gemessen auf der Referenzebene (P5), von vorzugsweise wenigstens 0,3 mm voneinander getrennt sind, und wobei
• ein Flächeninhalt jeder der Oberseitenflächen (5t) zwischen 0,25 und 50 mm², vorzugsweise zwischen 1 und 35 mm², besonders bevorzugt zwischen 3 und 8 mm², beträgt und wobei
• die poröse Schicht (5p)
o offene Poren (3) umfasst, die sich an der Oberseitenfläche (5t) öffnen und die an der Oberseitenfläche (5t) einen mittleren Porendurchmesser (Dp), gemessen auf einem Kreis (6) der Referenzebene (P5), der in jeder Pore eingeschlossen ist, aufweisen, der zwischen 1 und 5000 nm, vorzugsweise zwischen 5 und 50 nm, besonders bevorzugt 20 ± 5 nm, beträgt, und
o einen Offenhohlraum-Volumenanteil (vv), definiert als ein Volumenanteil der offenen Poren, aufweist, der zwischen 30 und 90 Vol.-% beträgt.

2. Vorrichtung nach Anspruch 1, wobei die obere Hauptfläche (4), und vorzugsweise wenigstens ein Abschnitt der peripheren Wände (5w), hydrophobischer als die Oberseitenflächen (5t) der porösen Schichten (5p) ist.

3. Vorrichtung nach Anspruch 1 oder 2, wobei die Basis (2) :
• aus demselben Silicium wie die einzelnen Vorsprünge (5) und einstückig mit diesen hergestellt ist, wobei die Basisdicke (Tb) vorzugsweise zwischen 50 und 1500 um, besonders bevorzugt zwischen 380 und 750 um, beträgt, oder
• aus einem anderen Material als dem Silicium der einzelnen Vorsprünge (5), vorzugsweise einem Metall, besonders bevorzugt einem nichtrostenden Stahl, hergestellt ist, wobei die Basisdicke (Tb) wenigstens 200 um, vorzugsweise wenigstens 500 um, besonders bevorzugt zwischen 700 und 1000 um, beträgt, oder
• eine laminare Struktur ist, mit einem Silicium-Basisabschnitt (2si) mit einer Dicke (Tb1), gemessen entlang der Normalenrichtung (Z), der aus demselben Silicium wie die einzelnen Vorsprünge (5) und einstückig mit diesen hergestellt ist, der mit einem Tragabschnitt (2s), der aus einem anderen Material als dem Silicium der einzelnen Vorsprünge (5), vorzugsweise einem nichtrostenden Stahl oder Aluminium, einem Polymer, vorzugsweise einem leitfähigen Polymer oder Kompositwerkstoff, oder einem Glas, hergestellt ist, mit einer Dicke (Tb2), gemessen entlang der Normalenrichtung (Z), gekoppelt ist, wobei die Basisdicke (Tb = Tb1 + Tb2) vorzugsweise zwischen 300 um und 700 um beträgt.

4. Vorrichtung nach einem der vorangehenden Ansprüche, wobei die obere Hauptfläche (4) funktionalisiert ist, vorzugsweise um ihre Hydrophobizität zu erhöhen, durch:
• Modifizieren der oberen Hauptfläche (4) und/oder durch
• Beschichten der oberen Hauptfläche (4) mit einer Funktionsschicht (9), die vorzugsweise eine fluorchemische Verbindung oder eine Polyolefinverbindung umfasst, wobei die Funktionsschicht (9) eine Funktionsschichtdicke (tf), gemessen entlang der Normalenrichtung (Z), aufweist, die kleiner als 90 % der Vorsprungshöhe (Hp), vorzugsweise kleiner als 50 %, vorzugsweise kleiner als 25 %, der Vorsprungshöhe (Hp) ist.

5. Vorrichtung nach einem der vorangehenden Ansprüche, wobei die Vorsprungshöhe (Hp) zwischen 50 und 10000 nm, vorzugsweise zwischen 100 und 2000 nm, besonders bevorzugt zwischen 600 und 1100 nm, beträgt.

6. Vorrichtung nach einem der vorangehenden Ansprüche, wobei jeder einzelne Vorsprung (5) durch eines der Folgenden gekennzeichnet ist:
• die Oberseitenfläche (5t) ist kreisförmig,
• der Flächeninhalt der Oberseitenfläche (5t) beträgt zwischen 0,25 und 50 mm², vorzugsweise zwischen 3 und 8 mm²,
• die poröse Höhe (hp) beträgt zwischen 5 und 90 %, vorzugsweise zwischen 20 und 90 %, der Vorsprungshöhe (Hp), vorzugsweise mehr als 50 % der Vorsprungshöhe (Hp),
• der Offenhohlraum-Volumenanteil der porösen Schicht (5p) beträgt zwischen 30 und 90 Vol.-%, vorzugsweise zwischen 50 und 80 Vol.-%,
• die Oberseitenfläche (5t) ist funktionalisiert, um die Kompatibilität mit dem zu konzentrierenden Analyten zu erhöhen,
• die obere Hauptfläche (4) ist funktionalisiert, um die Lösung, die den Analyten enthält, abzuweisen,
• eine beliebige Kombination der Vorangehenden.

7. Vorrichtung nach einem der vorangehenden Ansprüche, die wenigstens 16 einzelne Vorsprünge (5), vorzugsweise wenigstens 25, besonders bevorzugt wenigstens 96, einzelne Vorsprünge umfasst.

8. Vorrichtung nach einem der vorangehenden Ansprüche, die eine Geometrie aufweist, die dazu ausgestaltet ist, direkt in einem Gerät zur Spektrometrie oder zur Gas- oder Fluidchromatographie (GC, HPLC) zum Nachweisen des in den porösen Schichten (5p) konzentrierten Analyten verwendet zu werden, wobei das Gerät vorzugsweise aus matrixunterstützter Laser-Desorption/Ionisation (MALDI) oder oberflächengestützter Laser-Desorption/Ionisation (SALDI) oder oberflächenverstärkter Raman-Spektroskopie (SERS) oder einem Fourier-Transform-Infrarotspektrometer (FTIR) ausgewählt ist.

9. Verfahren zur Herstellung der Vorrichtung nach einem der Ansprüche 1-8, folgende Schritte umfassend:
• Bereitstellen eines Substrats, das eine Siliciumschicht (7) umfasst, die eine anfängliche obere Hauptfläche (2i), die eben ist, aufweist, wobei die Siliciumschicht (7) eine anfängliche Dicke (Ti) aufweist, die größer als die oder gleich der Vorsprungshöhe (Hp) ist,
• Behandeln der anfänglichen oberen Hauptfläche (2i) mit einer ersten Ätzlösung (10), um eine poröse Silicium-Oberschicht (7p) mit einer gewünschten Dicke gleich der porösen Höhe (hp) zu erhalten,
• Maskieren von Abschnitten der porösen Silicium-Oberschicht (7p), die Positionen der Oberseitenflächen (5t) der porösen Schichten (5p) der Vorrichtung entsprechen, mit einer strukturierten Maske (8), die beständig gegenüber einer zweiten Ätzlösung oder gegenüber einer Gas- oder Plasmaätzbehandlung ist,
• Ätzen der porösen Silicium-Oberschicht (7p) und vorzugsweise eines Teils der Siliciumschicht (7), der dieser benachbart ist, bis zu einer Tiefe, die größer als die poröse Höhe (hp) ist, um die Abschnitte der porösen Silicium-Oberschicht (7p) und des Teils der Siliciumschicht (7), der dieser benachbart ist, die nicht durch die strukturierte Maske (8) abgedeckt werden, zu entfernen, unter Verwendung der zweiten Ätzlösung oder der Gas- oder Plasmaätzbehandlung,
• Entfernen der strukturierten Maske (8), um die Vorrichtung zu erhalten.

10. Verfahren nach Anspruch 9, wobei, nach dem Ätzen der porösen Silicium-Oberschicht (7p) und vor dem Entfernen der strukturierten Maske (8), die obere Hauptfläche (4) funktionalisiert wird, vorzugsweise durch Aufbringen einer Funktionsschicht (9) auf die obere Hauptfläche (4), wobei die Funktionsschicht vorzugsweise hydrophobisch ist.

11. Verfahren nach Anspruch 9 oder 10, das ferner ein Funktionalisieren der Oberseitenflächen (5t) umfasst, um die Hydrophilizität zu erhöhen und/oder um die Selektivität des und die Kompatibilität mit dem Analyten zu erhöhen, vorzugsweise durch eine Plasmabehandlung, vorzugsweise durch eine Plasma-Oberflächenbehandlung, vorzugsweise eine Corona-Oberflächenbehandlung.

12. Verfahren nach einem der Ansprüche 9 bis 11, wobei das Behandeln der anfänglichen oberen Hauptfläche (2i), um die poröse Silicium-Oberschicht (7p) mit einer gewünschten Dicke zu erhalten, folgende Schritte umfasst:
• Aufbringen der ersten Ätzlösung (10), die Fluorid, vorzugsweise Fluorwasserstoff, umfasst, und eines Netzmittels auf die anfängliche obere Hauptfläche (2i),
• Anlegen eines elektrischen Stroms an die anfängliche obere Hauptfläche (2i) für eine Zeit, die ausreicht, um die poröse Silicium-Oberschicht (7p) mit einer gewünschten Dicke (hp) zu erhalten.

13. Verfahren nach einem der Ansprüche 9 bis 12, wobei die zweite Ätzlösung zum Ätzen der porösen Silicium-Oberschicht (7p) und vorzugsweise der Siliciumschicht (7) verwendet wird, wobei die zweite Ätzlösung vorzugsweise ein Hydroxid, besonders bevorzugt Kaliumhydroxid (KOH) oder Tetramethylammoniumhydroxid (TMAH), umfasst.

14. Verfahren zum Konzentrieren eines Analyten, der in einer flüssigen Probe enthalten ist, unter Verwendung der Vorrichtung nach einem der Ansprüche 1-8, wobei das Verfahren folgende Schritte umfasst:
• Aufbringen eines Tropfens der flüssigen Probe, die den Analyten enthält, auf die Oberseitenfläche (5t) eines einzelnen Vorsprungs (5),
• Eindringenlassen einer Teilmenge des Tropfens der Flüssigkeit, die den Analyten in sich trägt, in die offenen Poren der porösen Schicht (5p) durch Kapillarität und Schwerkraft,
• Entfernen einer restlichen Teilmenge des Tropfens, die nicht in die poröse Schicht absorbiert wurde.

15. Verfahren zum Nachweisen eines Analyten in einer flüssigen Probe, umfassend:
• Konzentrieren des Analyten, den die flüssige Probe in sich trägt, mit einem Verfahren nach dem vorangehenden Anspruch 14,
• Laden der Vorrichtung in ein Gerät zur Spektrometrie oder zur Gas- oder Fluidchromatographie (GC, HPLC), das vorzugsweise aus matrixunterstützter Laser-Desorption/Ionisation (MALDI) oder oberflächengestützter Laser-Desorption/Ionisation (SALDI) oder oberflächenverstärkter Raman-Spektroskopie (SERS) oder einem Fourier-Transform-Infrarotspektrometer (FTIR) ausgewählt ist,
• Durchführen einer Analyse des Analyten mit dem Gerät.

## Revendications

1. Dispositif (1) pour échantillonner une pluralité de quantités séparées de liquide contenant un analyte et pour concentrer l'analyte, le dispositif comprenant une base (2) comprenant une surface principale inférieure (2d) et une surface principale supérieure (4) séparée de la surface principale inférieure (2d) par une épaisseur de base (Tb) mesurée le long d'une direction normale (Z) perpendiculaire à un plan de référence (P5), une pluralité de protubérances discrètes (5) en silicium faisant saillie sur la surface principale supérieure (4) sur une hauteur de protubérance (Hp) mesurée le long de la direction normale (Z),
• chaque protubérance discrète (5) étant surmontée d'une couche poreuse (5p) comprenant une surface supérieure (5t) comprise dans le plan de référence (P5),
∘ la surface supérieure étant reliée à la surface principale supérieure (4) par des parois périphériques (5w) définissant la hauteur de protubérance (Hp), et
∘ la couche poreuse de chaque protubérance discrète ayant une hauteur poreuse (hp) mesurée le long de la direction normale (Z), qui est inférieure à la hauteur de protubérance (Hp), et qui est de préférence comprise entre 5 et 90 % de la hauteur de protubérance (Hp), et
• les protubérances discrètes étant rigidement couplées et réparties sur la surface principale supérieure (4), de telle sorte que les surfaces supérieures (5t) des protubérances discrètes sont séparées les unes des autres par une distance (d1, d2, ...) mesurée sur le plan de référence (P5), de préférence d'au moins 0,3 mm, et
• une surface de chacune des surfaces supérieures (5t) étant comprise entre 0,25 et 50 mm², de préférence entre 1 et 35 mm², plus préférablement entre 3 et 8 mm² et,
• la couche poreuse (5p),
∘ comprenant des pores ouverts (3) s'ouvrant au niveau de la surface supérieure (5t) ayant un diamètre de pore moyen (Dp) au niveau de la surface supérieure (5t) mesuré sur un cercle (6) du plan de référence (P5) inscrit dans chaque pore compris entre 1 et 5000 nm, de préférence entre 5 et 50 nm, plus préférablement 20 ± 5 nm, et
∘ ayant une fraction volumique de vide ouvert (vv) définie comme une fraction volumique des pores ouverts comprise entre 30 et 90 % vol.

2. Dispositif selon la revendication 1, la surface principale supérieure (4), et de préférence au moins une partie des parois périphériques (5w), étant plus hydrophobe que les surfaces supérieures (5t) des couches poreuses (5p).

3. Dispositif selon la revendication 1 ou 2, la base (2) :
• étant constituée du même silicium que les protubérances discrètes (5) et étant solidaire de celles-ci, l'épaisseur de la base (Tb) étant de préférence comprise entre 50 et 1500 um, plus préférablement entre 380 et 750 um, ou
• étant constituée d'un matériau différent du silicium des protubérances discrètes (5), de préférence un métal, plus préférablement un acier inoxydable, l'épaisseur de base (Tb) étant d'au moins 200 um, de préférence d'au moins 500 um, plus préférablement comprise entre 700 et 1000 um, ou
• étant une structure laminaire avec une partie de base en silicium (2si) d'épaisseur (Tb1) mesurée le long de la direction normale (Z), constituée du même silicium que les protubérances discrètes (5) et solidaire de celles-ci, couplée à une partie de support (2s) constituée d'un matériau différent du silicium des protubérances discrètes (5), de préférence un acier inoxydable ou de l'aluminium, un polymère, de préférence un polymère conducteur ou un composite, ou un verre, d'une épaisseur (Tb2) mesurée le long de la direction normale (Z), l'épaisseur de base (Tb = Tb1 + Tb2) étant de préférence comprise entre 300 µm et 700 um.

4. Dispositif selon l'une quelconque des revendications précédentes, la surface principale supérieure (4) étant fonctionnalisée, de préférence pour en augmenter l'hydrophobie par :
• la modification de la surface principale supérieure (4), et/ou par
• le revêtement de la surface principale supérieure (4) d'une couche fonctionnelle (9) qui comprend de préférence un composé fluorochimique ou un composé polyoléfine, la couche fonctionnelle (9) ayant une épaisseur de couche fonctionnelle (tf) mesurée le long de la direction normale (Z) qui est inférieure à 90 % de la hauteur de protubérance (Hp), de préférence inférieure à 50 %, de préférence inférieure à 25 % de la hauteur de protubérance (Hp).

5. Dispositif selon l'une quelconque des revendications précédentes, la hauteur de protubérance (Hp) étant comprise entre 50 et 10000 nm, de préférence entre 100 et 2000 nm, plus préférablement entre 600 et 1100 nm.

6. Dispositif selon l'une quelconque des revendications précédentes, chaque protubérance discrète (5) étant **caractérisée par** l'une quelconques des situations suivantes :
• la surface supérieure (5t) est circulaire,
• l'aire de la surface supérieure (5t) est comprise entre 0,25 et 50 mm², de préférence entre 3 et 8 mm²,
• la hauteur poreuse (hp) est comprise entre 5 et 90 %, de préférence entre 20 et 90 % de la hauteur de protubérance (Hp), de préférence plus de 50 % de la hauteur de protubérance (Hp),
• la fraction volumique de vide ouvert de la couche poreuse (5p) est comprise entre 30 et 90 % en volume, de préférence entre 50 et 80 % en volume,
• la surface supérieure (5t) est fonctionnalisée pour améliorer la compatibilité avec l'analyte à concentrer,
• la surface principale supérieure (4) est fonctionnalisée pour repousser la solution contenant l'analyte,
• toute combinaison des éléments précédents.

7. Dispositif selon l'une quelconque des revendications précédentes, comprenant au moins 16 protubérances discrètes (5), de préférence au moins 25, plus préférablement au moins 96 protubérances discrètes.

8. Dispositif selon l'une quelconque des revendications précédentes, présentant une géométrie configurée pour être utilisée directement dans un appareil de spectrométrie ou de chromatographie gazeuse ou fluide (GC, HPLC) pour détecter l'analyte concentré dans les couches poreuses (5p), l'appareil étant de préférence choisi parmi la désorption/ionisation laser assistée par matrice (MALDI), ou la désorption/ionisation laser assistée par surface (SALDI), ou la spectroscopie Raman améliorée en surface (SERS), ou le spectromètre infrarouge à transformée de Fourier (FTIR).

9. Procédé de production du dispositif selon l'une quelconque des revendications 1 à 8, comprenant les étapes de :
• fourniture d'un substrat comprenant une couche de silicium (7) incluant une surface principale supérieure initiale (2i) qui est plane, la couche de silicium (7) ayant une épaisseur initiale (Ti) supérieure ou égale à la hauteur de protubérance (Hp),
• traitement de la surface principale supérieure initiale (2i) avec une première solution de gravure (10) pour obtenir une couche supérieure de silicium poreux (7p) d'épaisseur souhaitée égale à la hauteur poreuse (hp),
• masquage des parties de la couche supérieure en silicium poreux (7p) correspondant aux positions des surfaces supérieures (5t) des couches poreuses (5p) du dispositif avec un masque à motifs (8) résistant à une deuxième solution de gravure ou à un traitement de gravure au gaz ou au plasma,
• gravure de la couche supérieure de silicium poreux (7p) et de préférence d'une partie de la couche de silicium (7) adjacente à celle-ci à une profondeur supérieure à la hauteur poreuse (hp) pour retirer les parties de la couche supérieure de silicium poreux (7p) et une partie de la couche de silicium (7) adjacente, non couvertes par le masque à motifs (8), en utilisant la deuxième solution de gravure ou le traitement de gravure au gaz ou au plasma,
• retrait du masque à motifs (8) pour obtenir le dispositif.

10. Procédé selon la revendication 9, après la gravure de la couche supérieure de silicium poreux (7p) et avant le retrait du masque à motifs (8), la surface principale supérieure (4) étant fonctionnalisée, de préférence en appliquant sur la surface principale supérieure (4) une couche fonctionnelle (9), la couche fonctionnelle étant de préférence hydrophobe.

11. Procédé selon la revendication 9 ou 10, comprenant en outre la fonctionnalisation des surfaces supérieures (5t) pour améliorer l'hydrophilie et/ou pour améliorer la sélectivité et la compatibilité avec l'analyte, de préférence par un traitement au plasma, de préférence par un traitement de surface au plasma, de préférence par un traitement de surface corona.

12. Procédé selon l'une quelconque des revendications 9 à 11, le traitement de la surface principale supérieure initiale (2i) pour obtenir la couche supérieure de silicium poreux (7p) d'épaisseur souhaitée comprenant les étapes de :
• l'application de la première solution de gravure (10) comprenant du fluorure, de préférence du fluorure d'hydrogène, et un agent mouillant sur la surface principale supérieure initiale (2i),
• l'application d'un courant électrique à la surface principale supérieure initiale (2i), pendant une durée suffisante pour obtenir la couche supérieure de silicium poreux (7p) d'épaisseur souhaitée (hp).

13. Procédé selon l'une quelconque des revendications 9 à 12, la deuxième solution de gravure étant utilisée pour graver la couche supérieure de silicium poreux (7p) et de préférence la couche de silicium (7), la deuxième solution de gravure comprenant de préférence un hydroxyde, plus préférablement de l'hydroxyde de potassium (KOH) ou de l'hydroxyde de tétraméthylammonium (TMAH).

14. Procédé de concentration d'un analyte contenu dans un échantillon liquide utilisant le dispositif selon l'une quelconque des revendications 1 à 8, le procédé comprenant les étapes de :
• appliquer une goutte de l'échantillon liquide contenant l'analyte sur la surface supérieure (5t) d'une protubérance discrète (5),
• permettre à une partie de la goutte de liquide contenant l'analyte de pénétrer dans les pores ouverts de la couche poreuse (5p) par capillarité et gravité,
• éliminer une partie résiduelle de la goutte qui n'a pas été absorbée par la couche poreuse.

15. Procédé de détection d'un analyte dans un échantillon liquide comprenant :
• la concentration de l'analyte porté par l'échantillon liquide avec un procédé selon la revendication précédente 14,
• le chargement du dispositif dans un appareil de spectrométrie ou de chromatographie gazeuse ou fluide (GC, HPLC), de préférence choisi parmi la désorption/ionisation laser assistée par matrice (MALDI), ou la désorption/ionisation laser assistée par surface (SALDI), ou la spectroscopie Raman améliorée en surface (SERS), ou le spectromètre infrarouge à transformée de Fourier (FTIR),
• la réalisation d'une analyse de l'analyte à l'aide de l'appareil.
